(19) **Europäisches Patentamt**

**European Patent Office**

**Office européen des brevets**

(11) **EP 0 742 434 B1**

(12) **EUROPEAN PATENT SPECIFICATION**

(45) Date of publication and mention
of the grant of the patent:
**28.01.2004 Bulletin 2004/05**

(51) Int Cl.[7]: **G01N 23/225**, G01N 23/20

(21) Application number: **96500055.7**

(22) Date of filing: **08.05.1996**

(54) **X-ray quantative microanalysis method for metal alloys**

Quantatives Mikroanalyseverfahren mit Röntgenstrahlen für Metallegierungen

Microanalyse quantitative à rayons X pour alliages métalliques

(84) Designated Contracting States:
**AT BE CH DE DK FR GB GR IE IT LI LU MC NL PT SE**

(30) Priority: **09.05.1995 ES 9500880**
**07.05.1996 ES 9601013**

(43) Date of publication of application:
**13.11.1996 Bulletin 1996/46**

(73) Proprietor: **ACERINOX S.A.**
**Cadiz (ES)**

(72) Inventors:
• **Fernandez de Castillo Y Valderrama, Ignacio**
**Palmones (Los Barrios), Cádiz (ES)**
• **Botella Arboledas, Jaime**
**Palmones (Los Barrios), Cádiz (ES)**
• **Almagro Bello, Juan Francisco**
**Palmones (Los Barrios), Cádiz (ES)**

(74) Representative: **Gonzalez Vacas, Eleuterio**
**Calle Sagasta, 4**
**28004 Madrid (ES)**

(56) References cited:
**EP-A- 0 400 396      EP-A- 0 409 209**

• **ANALYTICAL CHEMISTRY, vol. 62, no. 22, 15 November 1990, pages 1159A-1166A, XP000165605 NEWBURY D E ET AL: "COMPOSITIONAL MAPPING WITH THE ELECTRON PROBE MICROANALYZER: PART I"**

• **DATABASE WPI Section Ch, Week 8242 Derwent Publications Ltd., London, GB; Class J04, AN 82-89972E XP002011059 & SU-A-890 182 (BEREZNIKOVSK BR TIT) , 17 December 1981**
• **DATABASE WPI Section Ch, Week 9229 Derwent Publications Ltd., London, GB; Class J04, AN 92-240661 XP002011060 & SU-A-1 670 551 (UNIV IRKUT PETRO & COAL CHEM SYNTH INST) , 15 August 1991**
• **FERNANDO L.A.: 'Electron spectroscopy in an industrial analytical laboratory' SPECTROCHIMICA ACTA vol. 41B, no. 6, 1986, GREAT BRITAIN, XP000576681, pages 611 - 617**
• **CLIFF G.: 'The quantitative analysis of thin specimens' JOURNAL OF MICROSCOPY vol. 103, no. 2, 1975, OXFORD, pages 203 - 207**
• **WINTSCH W.: 'Coupling of energy-dispersive and wavelength-dispersive spectrometers by use of a central computer with an electron microprobe analyser' MIKROCHIMICA ACTA 1982, WIEN, pages 63 - 72**
• **WITTRY D.B.: 'Methods of quantitative electron probe analysis' SYMPOSIOUM ON X-RAY AND ELECTRON PROBE ANALYSIS 1963, pages 130 - 150**
• **YAKOWITZ H.: 'FRAME: An on-line correction procedure for quantitative electron probe microanalysis' NBS TECHNICAL NOTE no. 796, 1982, pages 1 - 46**
• **COLBY J.W.: 'Quantitative microprobe analysis of thin insulating films' ADVANCES IN X-RAY ANALYSIS vol. 11, 1968, NEW YORK, pages 287 - 305**
• **ZIEBOLD T.O.: 'An empirical method for electron microanalysis' ANALYTICAL CHEMISTRY vol. 36, no. 2, 1964, pages 322 - 327**

**Description**

**INVENTION FIELD**

This invention refers to a method for the quantitative microanalysis of metal alloys which is executed in an electron gun based system (scanning electron microscopes) and has a device able to detect X-rays by energy dispersion. This method is also based in a set of metal alloys fitting some specific structural and compositional characteristics in a way that they can be used as standards for quantitative microanalysis of metal alloys, using the EDS-SEM technique; and to a device to hold the alloy set, designed to be employed in a SEM.

**BACKGROUND OF THE INVENTION**

Energy Dispersive X Ray analysis [EDS] attached to Scanning Electron Microscopy [SEM] is a very important analytical tool in materials research and development, in particular, in metallurgical research laboratories (Goldstein et al, 1981; Fernando et al, 1986; Dyson, 1988; Feliú, 1993).

Traditionally, the detection limit for this technique is considered to be between 0.1 % and 1 % in weight, depending on the element to be analysed and the matrix where it is (Balser, 1985).

Comparing this technique to other similar ones, such as Transmission Electron Microscopy [TEM] or Electron Microprobe [EPMA], it is necessary to consider that for TEM observation and/or analysis, a very tedious and expensive sample preparation must be performed, good results are not always guaranteed either. On the other hand, the attainable lateral resolution is better than 0.5 nm, the analysis is not affected by absorption interferences (thin samples), and it is possible to carry good quantitative analyses out by computing the Cliff-Lorimer factors (Cliff et al, 1985). This analysis method is not very complex. Barba et al., describe an example of this working methodology (Barba et al, 1991).

Scanning electron microscopy, SEM, was developed at the same time as electron microprobe, EPMA, (Agarwal, 1991). In a microprobe, analytical conditions are optimized, it allows to get results with a relative error between 1 and 2 %. However, to do it, it is necessary to prepare samples polishing up to mirror finishing and to calculate calibration curves with standards to compute results. Moreover, the lateral resolution is about 10 nm in general (Goldstein et al, 1981 and Heinrich et al, 1986). Some of the results which can be obtained with an EPMA are described by Wintsch et al. (1982); Isakozawa et al. (1991) ; Newbury et al. (1990) .

On the other hand, using an EDS-SEM combined technique it is possible to get qualitative, even semiquantitative results without any standard. Sample preparation only requires to be a solid and with an electricity conductive surface. Better results are obtained with polished samples anyway. A resolution in the order of 3 to 5 nm is attainable with this combined technique.

Other consideration to be taken into account is the cost, the basic required instrumentation for EDS-SEM is approximately three times cheaper than the equivalent in the other techniques.

Advantages regarding versatility to analyse different kind of samples without standards, nearly without preparing the sample, and with cheaper equipments, make this technique, EDS-SEM, very attractive in the frame of Metallurgical Control and Research Laboratories.

The concentrations, in semiquantitative EDS-SEM microanalysis, are obtained from the rate among X ray intensities of every emitting element, using ZAF method correction, which is partially based on theoretical considerations, as this is a regression method based on the computation of factors depending on the mean atomic number, matrix absorption and fluorescence radiation (Colby, 1968; Henke et al, 1985 and Poehn et al, 1985).

These methods are based, like every quantitative microanalysis method, on a proportionality rule found between concentration and X ray emission intensity, revealed by Castaign in his Doctoral Thesis (Castaign, 1951), who demonstrated that for some determined conditions the relation in equation [1] is fulfilled,

$$\frac{C_i}{C_p} \; \alpha \; \frac{I_i}{I_p} \qquad\qquad [1]$$

$C_i$ is the unknown concentration of element i; $I_i$ the measured intensity of element i. $C_p$ and $I_p$, are the concentration and the measured intensity for element i in a standard.

From the previous work, several authors (Wittry, 1963; Philibert, 1963; Duncumb et al, 1966) have been developing in their studies to end in the work by Henke and Poehn, previously cited, where the unknown concentration of element i is stated as in equation [2],

$$C_i = (ZAF) * \frac{I_i}{I_p} \tag{2}$$

where $C_i$ is the weight fraction for element i; (ZAF) is a constant representing the matrix effect; $I_i$ and $I_p$ are the same than in the previous formula.

This method is known as ZAF, for actual samples with a complex composition it is based on an iterative computation to reach a determined minimum allowed error. Examples of the good results attainable by this method, having good samples (binary alloys, without spectral overlaps) are shown in Henoc et al, 1973; Myklebust et al, 1973 or Goldstein et al, 1981. From these considerations several analysis softwares have been developed (Henoc et al, 1973; Yakowitz et al, 1973; KEVEX Corp., 1986). Some of them have been commercialized.

The relative error of obtained results ranges from 10 % for major elements (elements which chemical concentration is higher than 5% in weight) to more than 100 % for some minor elements. In this method obtained emission spectra are adjusted using spectra acquired from pure elements.

A different analysis method employed from the sixties (Ziebold et al, 1964) is called the empirical method. It is based on the computation of some factors to meet a hyperbolic rule [3],

$$\frac{C}{1-C} * \frac{1-k}{k} = a \tag{3}$$

C is the true weight fraction of the element to analyse; and k, the measured relative intensity.

It is necessary to take into account that spectra acquisition (suite of X rays generated by a sample in some specific conditions and time that are collected by the detector system) should be carried out following the same analysis conditions. This method works very well for binary alloys. However, greater disadvantages of this method are, firstly, to get standards with proper chemical compositions, secondly, that the extension of this method to analyse materials having more than two elements is not clear.

The early attempts to make calibration curves were highly related to the empirical method. EDS-SEM calibration curve calculations is a method used only for binary alloys nowadays. In short, it is a method derived from the previous one that provides better results for some applications.

In case of having a suitable standard available, with a chemical composition similar enough to the sample, the matrix effect should be similar for both ones, and in this way, it is possible to compute the unknown chemical composition from the rate between intensities in the standard and the unknown. However, these standards are rarely available (Heinrich et al, 1986).

Several authors have worked to establish the conditions required for a good microanalysis standard (Russ, 1974; Marinenko et al, 1979). A standard for microanalysis must be carefully analysed at macroscopical level, and it is also necessary to check its microscopical homogeneity.

Standards must have an homogeneous microstructure, this is necessary because in EDS-SEM the electron beam, simultaneously used to produce images and to excite X-rays, has an interaction volume between 0.2 and 1 $\mu m^3$ around the incidence point (approximately 5 nm).

Preparation of a full set of standards, to study a single system, is a technique only used in metallurgy since it is the way to guarantee the validity of results when a good knowledge of a system is required, for instance to establish precisely the limits in a phase diagram. Through this technique, a lot of binary system phase diagrams have been studied, for instance, the Iron-Nickel system (Yakowitz et al, 1973; Heinrich et al, 1986).

In steel analysis, this technique is used to study problems such as inclusions characterization or phase analysis; that is, generally, very small segregations or phase analysis (Dyson, 1988; Feliú, 1993).

As it has been stated in previous works cited above, for different phase analysis in steels, it is necessary to diminish the error made with the common methods because sometimes, the difference in chemical compositions of the phases is lower than the admitted error.

For high alloyed steels, better results are generally obtained by the *match up to a standard* method, than by ZAF programmes (Goldstein et al, 1981; KEVEX Corp., 1986). It is not always possible to get a good standard, similar enough for all elements, however. When there is a noticeable difference for any element, the error made to determine that element increases a lot.

In this frame, ACERINOX Research group, conscious of the great interest in the metallurgical sector in developing systems to precisely determine composition and homogeneity grade for steels and iron based alloys, planned the usefulness of studying the application of several steels as standards for microanalysis.

The requirement of needing a standard for every material to be analysed turns out not to be very practical, since that way leads to the paradox that to analyse the chemical composition of different phases in a steel, it is not possible to make a standard, because that composition is only present in small segregated grains from any of those minor phases.

It looks quite logical to apply the regression curve method for steels analysis. However, in the case of analysing complex alloys, the number of interferences increases with the number of elements and computation gets excessively complicated. Nowadays, the chance of using high speed and calculus power computers makes this work easier and makes possible to face up to this kind of problem from a different point of view. Nevertheless, to develop this method it is required to have a set of standard samples, taking into account every possible interference for a correct quantification.

As a summary, the approximations used to solve the problem of quantitative microanalysis of metal alloys, are based on the following classical techniques:

A) ZAF: For this technique it is necessary to have a set of pure elements to be used as standards. When this is not possible a perfectly characterized compound without any spectral interference for the element to be analysed should be used. It is necessary to acquire a spectrum for each standard in the same conditions of the analysis. Once the spectrum of the specimen has been acquired, that spectrum is corrected using those of the standard and with a mathematical algorithm based on theoretical considerations, the chemical composition is computed. This method has a considered good precision because of its general applicability but it is low for the specialization needed in the control and research metallurgical laboratories. The acquisition of standards should be done, for example, yearly, to update the corrections, however, this is not usually done because the improvement obtained is lower than the error of the method.

B) Comparison with a Standard: This technique requires to have a standard similar enough to the unknown sample so that it is possible to calculate the composition by direct comparison of the two spectra (standard and unknown), acquired in the same conditions, although in different moments. This technique has the disadvantages that for some problems it is impossible to find a standard. So, although the obtained precision is good, it is only applicable to very specific cases.

C) Regression curves construction: It is applied to WDS-SEM but only for binary alloys (Fe-Ni or Al-Cu, for instance). There is no bibliography on its application in EDS-SEM. In this case, and due to the variability of results with this detection technique (WDS), the work method consists on the acquisition of standard and specimen emission spectra in the same analysis conditions and in the same work session (they must be inside the sample holder chamber at the same time and in conditions of being observed and analysed). This makes this technique very bothersome and impracticable for alloys where more elements are interesting.

None of these approximations is completely satisfactory, so there is a need to improve the precision obtained using different analytical techniques.

The present invention supplies a set of metal alloys with homogeneous chemical composition and monophasic crystalline structure, that is why they can be used as quantitative microanalysis steel standards in EDS-SEM for the specified composition ranges. The way to calibrate an EDS-SEM system is also, described. Finally, a new microanalysis method to be applied to unknown samples is established.

## BRIEF DESCRIPTION OF PICTURES

Figure 1 is a photomicrograph, magnification x 135 (X135), where the typical structure of AISI 410LM and AISI 410S steels is shown. A structure made of a ferritic granular network with numerous chromium carbide particles scattered in the matrix is observed. To develop this structure an immersion for 45 to 60 seconds in Vilella's reagent [1 g of picric acid is solved in 100 ml ethanol, then 10 ml of hydrochloric acid are added] has been used.

Figure 2 is a photomicrograph (X675) showing the typical structure of AISI 420 steel. A ferritic granular network plentiful of chromium carbides scattered in the matrix can be seen. The surface of this steel was etched with Vilella's reagent to develop the structure.

Figure 3 is a photomicrograph (X135) were the typical structure of AISI 430 and AISI 434 steels is shown. This is a ferritic granular network with chromium carbides scattered in the matrix too. The development of this structure has been carried out with Vilella's reagent.

Figure 4 is a photomicrograph (X135) showing the typical structure of AISI 304, 304L, 310 and 316 steels. A twinned grain austenitic structure can be observed, as a consequence of an annealing and quenching treatment. To develop this structure the steel surface was electrolytically etched in an oxalic acid (10 % in distilled water) bath for 60 seconds, and applying 6 volts.

Figure 5 is a photomicrograph (X135) where the typical structure of CU 1 steel is shown. It presents a ferrite /martensite duplex structure due to water quench after austenization temperature. The development of this structure has been carried out using Vilella's reagent.

Figure 6 is a photomicrograph (X135) showing the typical structure of a BAS 61 steel. It is a ferritic granular network with carbides very heterogeneously scattered in the matrix, they seem to be grouped in "clouds". This structure has been developed with Vilella's reagent.

Figure 7 is a photomicrograph (X675) were the structure of BAS 452/1 steel is shown. This structure is composed of white areas, ferrite, grey areas formed by globular pearlite, and black areas, very fine laminar pearlite. To develop this structure an immersion for 5 to 10 seconds in a solution of 3% nitric acid in ethanol (Nital) has been used.

Figure 8 is a photomicrograph (X675) showing a typical structure of a BCS 290/2 steel. This structure consists of twinned austenitic grains with slip bands due to deformation. The development of this structure has been carried out by etching with Vilella's reagent, followed by 5% hydrochloric acid in distilled water to clean the surface.

Figure 9 is a photomicrograph (X675) where the typical structure of BAS 409/1 steel is shown. A ferritic matrix with a slight dispersion of carbide particles is observed. This structure has been developed with 3% nitric acid in ethanol (Nital) solution, immersion for 5 to 10 seconds.

Figure 10 shows a drawing of a device, disc-shaped, provided by this invention.

## DETAILED DESCRIPTION OF THE INVENTION.

The method supplied by this invention allows to improve the result precision of X-ray quantitative microanalysis obtained by energy dispersive detectors, EDS, attached to systems which have electron sources (SEM) on metallic samples.

This microanalysis method is based on the employment of a device, designed to work in a SEM, holding a set of metal alloys. In a particular development of this invention, steels (as metal alloys to be used) have been chosen. They have some determined structural and compositional characteristics which allow them to be used as standards for quantitative microanalysis of the same base metal alloys (in the development cited above, as the standards are steels, the microanalysis of iron based metal alloys would be carried out), in X ray analysis systems using energy dispersive, EDS, X ray, detectors coupled with SEM microscopes.

To get the above mentioned device, firstly the design, selection, characterization and manufacture of a set of alloy standards for microanalysis should be carried out. They must keep the necessary homogeneity (chemical and structural) requirements and cover a wide range of chemical compositions. According to such premises several Primary or International Standards, if they exist and have the desired chemical composition, can be selected. These ones are materials governed by reference standards and which calibration is performed by a recognized external calibration centre. They have well defined and characterized chemical composition, or for lack of them, some Secondary Standards that are analysed to determine their chemical composition. All the selected standards must be structurally characterized, for instance, by optical metallography studies.

Afterwards, every selected and characterized alloy is inserted in a device. In the design and manufacture of this device it should be taken into account, among other things, that it has to work in the sample holder chamber of a SEM microscope where it is necessary to fulfil some specific requirements regarding size and electrical conductivity and also the convenience of having a built-in device to measure the electron beam status in any moment to be used as a reference.

Then, material pieces are machined up to a size small enough to allow their inclusion in the standards device, and finally the small pieces are mounted in the device in a way that warrants the electrical conductivity of the whole set.

It is necessary to calibrate EDS-SEM system following an established method (for an example of this method, see Almagro et al., 1996). It is necessary to take into account the time passed from the last calibration to the analysis moment; so, it is advisable to do a monitor measurement (analysing a sample of known composition to measure the method deviation) at least once a month.

To get better results it is necessary that the sample surface preparation is the same, or as similar as possible, as that of the standards used to calibrate the system. A fundamental aspect for result goodness and reproducibility is to do a data acquisition according to the same working schedule followed with the standards, even applying them the same statistics of marginal data purge applied in the system calibration.

Following, the net intensities of each element in the sample to be analysed are introduced in a formula which relates a determined element concentration (in weight percentage) to the measured intensities from detected elements.

So, this invention provides a method to quantitatively microanalyse metal alloys, in X-ray analysis systems using energy dispersive (EDS) X ray detectors coupled with a scanning electron microscope (SEM) which includes the following steps:

a) to prepare a standard device which contains a set of standard samples for the metal alloy at issue, designed to be used with X-ray analysis systems using EDS detectors, coupled with SEM;
b) to calibrate the chosen quantitative microanalysis system with such a standard device by optimizing geometric and electronic variables of the chosen microanalysis system and establishing an adjusting equation which relates mathematically the analysed elements net intensities and the percentage composition of the material in the tested standard;

c) to prepare each sample to be analysed by the same treatment, or very similar, to the one applied to the standard samples in the standard device;

d) to introduce the samples to be analysed, once prepared, in the SEM sample holder;

e) to fix the geometric and electronic variable of the chosen quantitative microanalysis system;

f) to acquire a determined number of spectra from each sample to be analysed and treat the acquired data in a standard way, depending on the detection equipments used to get the net intensities of each element present in the spectrum; and

g) to introduce the net intensity values in the adjusting equation which relates mathematically the element net intensities to the composition (as percentage) to compute the unknown sample composition.

The method proposed by this invention has the following limitations:

1) the method is not applicable when elements not included in the regression are present in analytical concentrations;

2) the method does not give reliable results when one or several elements to be analysed are present in higher quantities than the considered analytical ranges.

Next, the above mentioned steps will be described in a more detailed way.

1. Manufacture of a device which contains a set of metal alloy standard samples

1.1 Selection of materials

The alloys to be used as standards for EDS-SEM should have two essential characteristics:

1. Homogeneous chemical composition.
2. Monophasic crystalline structure.

Following these premises, several materials are selected by their compositions and a metallographic study is performed to check their fitting degree to the requirements described by Russ, 1974 and Marinenko, 1979.

The aim is to get a set of alloys of the same metal base keeping, as far as possible, the requirements proposed in the previous works just mentioned, so they can be used as standards for quantitative microanalysis by EDS-SEM for the specified composition ranges.

The selection of alloys to be used as standards must be carried out trying to cover a wide range of concentrations of those characteristic and typical elements in the alloy at issue (in the Example 1, a particular development of this invention has been carried out. In this case, the metal alloys to be analysed are iron-based, so, the standards have been low and high alloyed steels, with elements, such as Si, Cr, Mn, Fe, Ni, Cu and Mo). Within these wide ranges may have been specific concentration ranges to be studied thoroughly which are selected as a function of the ranges where the typical composition of interesting alloys are. For a particular instance of this invention, the ranges shown in Table 1 have been studied (see Example 1.1).

To get standards which chemical compositions are inside these ranges single phase structure steels should be used whenever it is possible. When it is not possible, well characterized steels can be selected, moreover it is necessary to check their chemical composition homogeneity. The present phases characterization should be also performed.

When possible, materials selected should have specially low content of those elements which promotes non-metallic inclusions (such as Al, S or Ti in the case of Example 1), since the abundant presence of those inclusions causes problems in the microstructural homogeneity required in this study.

In principle, as the number of standards used increases, the covering of the composition range to study improves, and therefore higher precision is reached in the analysis. However, on the one hand the necessary requirements at microstructural level, and on the other hand, the available room in the sample holder chamber of the SEM microscope, restrict this possibility. In a particular development of this invention, due to the limitations cited above, 15 alloys with compositions ranging the most interesting intervals have been selected (see Example 1.1).

1.2 Material chemical composition analysis

Once the materials to be used have been selected, it is essential to analyse their chemical composition.

1.2.1 International standards

When the materials are International Standards, it is accepted that their compositions are those offered by the company in charge of their manufacture and certification. Alternatively, should there exist any difference between the values offered by the manufacturing company and the results obtained by independent institutions for materials certification, then a mean value is considered.

In a particular development of this invention BAS 61, BAS 452/1, BCS 290/2 and BAS 409/1 steels have been used as international standards. Their chemical compositions are summarised in Table 2 (Example 1.2.1).

1.2.2 Secondary standards

When a primary standard with the desired chemical composition cannot be selected, it is necessary to choose a different alloy to be used as a secondary standard. In this case, chemical composition of that material should fit the previous cited requirements, that is, its composition should be homogeneous and with low level of elements able to form non-metallic inclusions.

In a particular development of this invention, steels have been employed as secondary standards. these steel samples come from ACERINOX, S. A. production. Their chemical composition has been computed according to the "Secondary Standard Certificate" which include the following steps:

- Measurement of monitor Sample every 8 hours (3 shifts per day), to establish an accurate drift pattern and to make any correction quickly and accurately.
- Measurements of International Standards to check the equipment comparing the results 'with theoretical results according to the acceptance standard NDT-8013, *Procedure for the analytical verification and accuracy in analytical equipments.*
- Measurements of samples from ACERINOX, S. A. production in different days and shifts and standardization according to the acceptance standard NDT-8006, *Use of Philips PW 1600/10 simultaneous X Ray Fluorescence spectrometer [XRF]*, and NDT-8012, *Analytical sample processes in Steelmaking Laboratory.*

To obtain representative results, the data to be used should be a mean of numerous analysis done by different shifts along successive days.

Elements of interest can be analysed using any suitable technique. In a particular application of this invention (Example 1.2.2). Si, Mn, Sn, Ni, Cu, Cr, P, Mo, Ti, Nb and Co have been analysed by X ray fluorescence [XRF], using the proper XRF spectrophotometer, whereas light elements, such as C, S and N have been analysed by infrared absorption (C, S) and thermal conductivity (N) using the suitable automatic analysers.

1.3 Material microstructure study

Once chemical compositions of selected materials have been analysed their microstructure analysis must be performed. To do that, metallographic samples from every alloy, in the same conditions as they are going to be used as standards, are prepared. Then, the structure of each one is revealed with the suitable reagent.

In a particular development of this invention (Example 1.3) the selected standards have been analysed by optical metallography using an adequate metallographic microscope and the structures have been revealed using Vilella's reagent, a solution of 3 % nitric acid in ethanol (Nital) or by immersion in a solution of 10 % oxalic acid in distilled water and electrolytic etching applying a voltage. In the Example 1.3 several comments are included regarding the structure and present phases analysis of the different standards used to carry that example out.

1.4 Design and manufacture of a device to hold the standard sample set

Once the standards have been obtained and chemically and structurally characterized, the next step is the design and manufacture of a device to hold the set of selected standards, keeping in mind that it will be used for metal alloys quantitative microanalysis, in X ray analysis systems, using EDS detectors attached to a SEM microscope.

Fundamental characteristics that this device must keep, are:

1) It should be manufactured of a material which do not produce interferences, by fluorescence or scattered radiation, on the elements to be analysed, on the measurements to be carried out. It must be a good electricity conductor, have good properties to be handled and machined, and have a good resistance against fortuitous hits. In a particular development, a suitable material is Titanium, as it do not interfere with the elements to be analysed,. Nevertheless, a different material can be used if it fits the requirement of interference absence with the elements to be analysed.

2) It should contain a series of holes where to place standard samples. In general, this device should contain a great number of standard samples so that the composition range to be studied is better covered and greater precision results should be obtained. Particularly, it is useful that this device has a number of holes that allow to hold a number of standard samples great enough to cover the ranges of compositions to be studied. In a preferred achievement of this invention, standard samples include the more usual chemical composition ranges in iron and steel industry and research. In particular, such standard samples can contain alloys whose chemical compositions cover, for instance, the typical ranges for low and high alloyed steels, in particular, alloys whose chemical compositions cover different concentration ranges of elements in the group formed by Si, Cr, Mn, Fe, Ni, Cu and Mo. On the other hand, these standard samples may be chemically and structurally homogeneous and, at the same time, they must cover a wide enough range of characteristic elements in the alloy of interest.

3) It should contain an independent device to measure the electron beam status, or current density, impinging at every moment on the samples, to make sure that all measurements are performed on the same conditions and to be able to measure those conditions. In a particular achievement, this measuring device can be a Faraday Cup connected to an external device for measuring the current density built-in the SEM microscope. This Faraday Cup can be made in the same device closing the bottom part of one of the holes and covering the inner walls with graphite to collect all the incoming radiation.

4) It must be as small as possible, in particular, it should have a size to let it be handled in the normal working conditions for SEM technique. This requirement is forced, firstly by the size of the sample holder chamber in the SEM microscope, where it is quite advisable that every measurement should be performed making the electron beam incidence perpendicular to the sample. On the other hand, if it is necessary to tilt the device with the standard set inside the sample holder chamber, its mobility would be seriously restricted if its size is not appropriate. So, the size of the device should be so that can be handled easily inside the sample holder chamber of the SEM microscope.

5) As the surface is being scanned with an electron beam, this device must be a good electricity conductor, in order to evacuate the electron excess. Therefore, the sample fixation should be done in a way that the electrical conductivity of the whole is preserved. In a preferred performance, the device surface is covered with a thin film of a material that guarantees its electrical conductivity.

Once the device to hold the standards has been manufactured, materials are machined up to a size that let them be introduced into the device holes and they are mounted in this device in a way that the electrical conductivity of the whole is guaranteed. In a particular instance, the standards are inserted in their respective holes and fixed with a polyester resin in the bottom part and with a graphite conductive paint in the upper part.

To get better results it is advisable to polish the device, for instance, with diamond paste up to a mirror finishing.

Finally, this device can be covered with a thin film of a material that guarantees its surface electrical conductivity. In a preferred instance, the device is covered with a 5.0 nm thin film of carbon, since on the one hand it improves the surface conductivity, and on the other hand, it prevents the surface of those more sensible to corrosion alloys from oxidation.

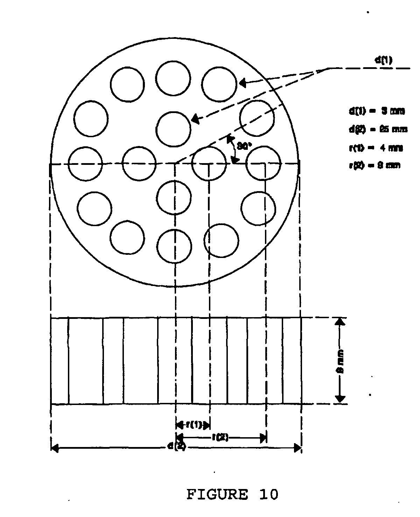

Figure 10 shows a drawing of a device, disc-shaped, made as described in the Example 2. Its size is included.

As it has been already mentioned, the steels selected to be included in the device, matter of this invention, should reasonably well keep the established requirements regarding chemical and structural homogeneity, as well as cover a wide enough range in composition for most important elements in the respective alloy industry. When it is possible to improve the metallurgy of these materials to allow the manufacture of alloys with fixed chemical compositions, as well as single phase structure, a set of standards offering results with greater reliability and accuracy could be prepared.

If the materials to be analysed are different from those firstly foreseen, it is possible to manufacture a device including new alloys covering new chemical composition ranges of interest. To do that, the alloys to be included in that device must keep the initial established requirements regarding homogeneity and any possible interference between elements must be prevented.

The device and standards size can vary but keeping the limitations due to its simple handling in the sample holder chamber of a SEM microscope, so it is possible to include a higher number of standards, if necessary, for a specific application, both to increase the composition range to study, and to include a greater number of standards in a small composition range of greater interest.

## 2. Microanalysis system calibration

When there is a set of standard samples, characterized in the way described in the previous section, included in a device such as the one previously described, this set can be used to do a microanalysis system (EDS-SEM) calibration

In a particular development of this invention, steels which cover the typical compositions of low and high alloyed steels have been chosen, varying elements such as Si, Cr, Mn, Fe, Ni, Cu and Mo. In a particular development of this invention, the ranges shown in Table 1 have been studied (see Example 1.1).

In a preferred development of this invention, the device where the standards are mounted, has a built-in Faraday cup to measure the incoming electron beam current at every moment. The set has been polished with diamond paste, to get a mirror finishing and, afterwards, it has been covered with a graphite film of about 5.0 nm to guarantee the surface electrical conductivity and prevent the most sensible to corrosion species from oxidation.

The materials chosen to form part of the standard set have been chemically and structurally characterized. The typical composition of the alloys in the particular development appears in Table 4 (see Example 2).

In an achievement of this invention, a system formed by a SEM with an EDS detector has been used. The geometric and electronic variables necessary for the analysis of iron-based metallic materials have been optimised, using the standard device [Standard Disc]. The optimum values found for the analysed electronic variables appear in Table 5 (see Example 3).

Finally, once the parameter values, to which the system response in a reproducible way, are known, it is necessary to find the mathematical expression which relates simply and precisely the net intensities of analysed elements to the material percentage composition. To do this, several polynomic adjusting models have been tested, and finally, the best results have been obtained with a polynomic multivariable regression model which follows equation [4].

$$C_i = (K_i + \Sigma_{j=selec} K'_j I_j) I_i + (K'_i + E_{j=selec} K''_j I_j) I_i^2 + \Sigma_{j=selec} K_j I_j \qquad [4]$$

$C_i$ is the weight fraction of i element; $I_i$ is the net intensity measured for i element; $I_j$ is the net intensity measured for j element in the same sample; and $K_i$, $K'_i$, $K_j$, $K'_j$, $K''_j$ are the regression model adjusting constants in the conditions of data acquisition; the j=selec subindex means that only the variables offering statistically optimum results are selected.

The results obtained for this adjusting model appear in Tables 6 and 7 (see Example 3).

3. Analysis of a sample with unknown chemical composition

Once the microanalysis system has been calibrated, to analyse a specimen, first, it is necessary to put the sample surface in the same surface status as the standard.

Then, it is introduced in the sample holder chamber of a SEM microscope and the variables are fixed to there optimum values. The specimen spectra acquisition is done, according to the established working method, and the net intensities from the elements of interest are counted.

Finally, the net intensity values are introduced in the adjusting formulae to get the unknown alloy composition.

In the Example 4, it is shown how to work with an unknown sample. The values found in this analysis appear in Table 9 (see Example 4).

**EXAMPLE 1. Selection and characterization of alloy standard set**

This test was carried out as a previous step to make a device to hold an alloy (steel in this example) standard sample set for steel quantitative microanalysis representative of ACERINOX, S. A. manufacturing.

1.1 Selection of materials

The selection of materials to be used as standards, steels in this particular development, was performed covering a wide range of concentrations for the elements Si, Cr, Mn, Fe, Ni, Cu and Mo. Those ranges were selected as a function of ranges were typical chemical compositions of interesting alloys are included. Table 1 shows analytical ranges studied for each element.

To get standards with chemical compositions in these intervals, monophasic crystalline structure materials have been used, whenever possible. When it was not possible, the selected steels were very well metallurgically characterized alloys, and besides, their chemical composition homogeneity has been checked. The different phases present have been also characterized. The selected steels should have a specially low level content of Al, S or Ti, if possible.

TABLE 1

| Range of compositions to be studied Concentrations as weight percentage | | | | | | | |
|---|---|---|---|---|---|---|---|
| | Si | Cr | Mn | Fe | Ni | Cu | Mo |
| **Maximum** | 1.50 | 25.00 | 12.50 | 98.00 | 20.00 | 1.50 | 2.25 |
| **Minimum** | 0.00 | 0.00 | 0.00 | 55.00 | 0.00 | 0.00 | 0.00 |

Due to the limitations imposed on keeping the necessary requirements at microstructural level and the suitable space in the SEM microscope sample holder chamber, 15 steels have been selected which composition range intervals have been cited above. The steels selected have been:

1. AISI 410LM. ACX 485.
2. AISI 410LM. ACX 585.
3. AISI 410S. ACX 385.
4. AISI 420. ACX 365.
5. AISI 430. ACX 500.
6. AISI 434. ACX 535.
7. AISI 316. ACX 250.
8. AISI 304. ACX 120.
9. AISI 304L. ACX 200.
10. AISI 310. ACX 350.
11. CU 1.
12. BAS 61.
13. BAS 452/1.
14. BCS 290/2.
15. BAS 409/1.

1.2 Material chemical composition analysis

1.2.1 International standards

In Table 2 the certified chemical compositions for International Standards used are shown (BAS 61, BAS 452/1, BCS 290/2 and BAS 409/1); these standards have been manufactured by Edgard Allen Steels Ltd. and their analyses have been certified by Bureau of Analysed Standards Ltd.).

TABLE 2

| International steel standards used. Concentrations as weight percentage | | | | |
|---|---|---|---|---|
| | **BAS 61** | **BAS 452/1** | **BCS 290/2** | **BAS 409/1** |
| **C** | 0.062 | 0.323 | 1.15 | 0.082 |
| **Si** | 0.42 | 0.055 | 0.34 | 1.46 |
| **Mn** | 0.78 | 1.30 | 12.5 | 0.44 |
| **Sn** | -- | 0.094 | -- | -- |
| **Ni** | 6.26 | 0.19 | 0.29 | 3.06 |
| **Cu** | (0.10) | 0.22 | (0.17) | 0.048 |
| **Cr** | 15.20 | 0.067 | 0.16 | 0.94 |
| **P** | 0.016 | 0.035 | 0.042 | 0.025 |
| **S** | 0.016 | 0.017 | 0.019 | 0.021 |
| **Mo** | -- | 0.054 | (0.031) | 0.65 |

TABLE 2   (continued)

| International steel standards used. Concentrations as weight percentage | | | | |
|---|---|---|---|---|
| | **BAS 61** | **BAS 452/1** | **BCS 290/2** | **BAS 409/1** |
| **Ti** | -- | 0.031 | -- | -- |
| **Co** | (0.040) | -- | (0.35) | 0.014 |
| **V** | (0.03) | -- | (0.02) | 0.09 |
| **As** | -- | 0.015 | -- | -- |
| <u>Table 2 notes</u><br>- Values in parenthesis are orientative.<br>- Values not shown are not offered by the manufacturer. | | | | |

In this Table the compositions are shown as they are offered by the manufacturer and certifier. When proper tests are performed by independent institutions to certify a material and they do not get results with adequate repeatability and reliability, the mean value is offered as orientative, in parenthesis, in Table 2.

1.2.2 Secondary standards

When a primary steel standard with adequate chemical composition could not be selected, it was necessary to select a different steel to be used as secondary standard. In this actual event samples from ACERINOX, S. A. production have been used as secondary standards. The chemical composition was computed according to the "Secondary Standard Certificate" which include the following steps:

- Measurement of monitor Sample every 8 hours (3 shifts per day), to establish an accurate drift pattern and to make any correction quickly and accurately.
- Measurements of International Standards to check the equipment comparing the results with theoretical results according to the acceptance standard NDT-8013, *Procedure for the analytical verification and accuracy in analytical equipments.*
- Measurements of the samples to be certified in different days, shifts and standardization according to the acceptance standard NDT-8006, *Use of Philips PW 1600/10 simultaneous X Ray Fluorescence spectrometer [XRF]*, and NDT-8012, *Analytical sample processes in Steelmaking Laboratory.*

Equipments used to certify secondary standards were:

1) PHILIPS PW1600/10 simultaneous multichannel XRF spectrometer. Description:

- Spectrometric chamber:
  It has 28 ports for the installation of channels, they are arranged in two levels around the X-ray tube, take-off angle of 29° and 44°, regarding the sample plane, which is presented directly under the X-ray tube.
- X-ray Tube:
  Vertical Beryllium end-window tube with Rhodium anode. Maximum ratings 60 KeV, 85 mA, 3 kW.
  Operating conditions according to the acceptance standards: 50 kV and 50 mA.
- Detectors:
  Scintillation counters, sealed proportional (Xe or Kr) and flow proportional (PR-10, mixed gas, Ar and methane).
- Computer:
  Hardware: PC AT/80386 with a 40 MB Hard disk. VGA board and colour screen. Printer and keyboard.
  Software: O. S. MS-DOS. Philips analytical package X42 v.3.lb to control all basic functions in the spectrometer.
  Elements analysed with this equipment have been Si, P, Ti, Cr, Mn, Co, Ni, Cu, Nb, Mo and Sn.

2) Carbon and sulphur analyser system LECO CS-444.
  Description:

- HF-400 induction furnace.
- Built-in balance.
- Display monitor, printer and keyboard.
- Built-in computer (20 MB hard disk).

Specifications:

- Detection method: Solid state Infrared Absorption for both carbon and sulphur.
- Range at 1 gram:

  - Carbon low: 0.00 0.5 %.
  - Carbon high: 0.00 6.0 %.
  - Sulphur: 0.00 - 0.35 %.

- Accuracy: Carbon and sulphur $\pm$ 0.3 ppm or $\pm$ 0.5 % C/S present.
- Precision: Carbon and sulphur, 0.1 ppm
- Analysis Time: Nominal, 40 s.
- All functions are defined and controlled by software.

3) Nitrogen and oxygen analyser system, LECO TC-436. this system is also able to analyse nitride and oxide contents in metals, ores, etc.
Description:

- EF-400 electrode furnace.
- Built-in balance.
- Display monitor, printer and keyboard.
- Built-in computer (20 MB hard disk).

Specifications:

- Detection method:

  - Oxygen: infrared absorption.
  - Nitrogen: thermal conductivity.

- Range at 1 gram:

  - Oxygen: 0.00001 % - 0.1 %.
  - Nitrogen (low) : 0.00001 % - 0.5 %.
  - Nitrogen (high): 0.001 % - 0.5 %.

- Accuracy:

  - Oxygen: $\pm$ 0.0001 or $\pm$ 1% of oxygen present.
  - Nitrogen (low): $\pm$ 0.0001 or $\pm$ 1% of nitrogen.
  - Nitrogen (high): $\pm$ 0.0005 or $\pm$ 1% of nitrogen.

- Analysis time:

  - Total nitrogen/oxygen = Nominal 40 s.
  - Nitride/oxide = Nominal 150 s.

- All functions are defined and controlled by software.

Additionally, conventional equipments for cutting, grinding and machining of steel specimens have been used.
Table 3 shows the obtained results, every data is the mean value of 15 analyses made by different shifts along successive days.
The chemical composition of these steels fulfils the previously mentioned conditions, that is, they have low level of non metallic inclusion former elements (S, Ti), and, analytical ranges of interest are covered among them.

Iron is an element which concentration is computed by EDS-SEM together with the other ones. However, that concentration is not obtained by XRF, and it is not specified for International Standards used.

TABLE 3

| Secondary Standard Certification Analysis Concentrations as weight percentage | | | | | | | | | | | |
|---|---|---|---|---|---|---|---|---|---|---|---|
| AISI ACX | 410LM 485 | 410LM 585 | 410S 385 | 420 365 | 430 500 | 434 535 | 316 250 | 304 120 | 304L 200 | 310 350 | CU 1 |
| C | 0.011 | 0.012 | 0.037 | 0.278 | 0.057 | 0.048 | 0.035 | 0.043 | 0.020 | 0.043 | 0.030 |
| Si | 0.27 | 0.31 | 0.43 | 0.45 | 0.32 | 0.34 | 0.27 | 0.38 | 0.38 | 0.98 | 0.39 |
| Mn | 0.86 | 0.52 | 0.51 | 0.83 | 0.37 | 0.30 | 1.15 | 1.47 | 1.36 | 0.29 | 0.25 |
| Sn | 0.008 | 0.013 | 0.010 | 0.007 | 0.008 | 0.011 | 0.005 | 0.015 | 0.011 | 0.007 | 0.016 |
| Ni | 0.38 | 0.82 | 0.14 | 0.15 | 0.16 | 0.18 | 10.69 | 8.16 | 9.26 | 19.21 | 0.17 |
| Cu | 0.07 | 0.07 | 0.07 | 0.04 | 0.04 | 0.10 | 0.23 | 0.25 | 0.19 | 0.05 | 1.43 |
| Cr | 11.03 | 11.16 | 12.25 | 13.42 | 16.32 | 16.36 | 17.06 | 18.38 | 18.29 | 24.21 | 16.04 |
| P | 0.022 | 0.022 | 0.022 | 0.017 | 0.022 | 0.025 | 0.030 | 0.038 | 0.025 | 0.022 | 0.019 |
| S | 0.002 | 0.002 | 0.002 | 0.003 | 0.002 | 0.004 | 0.002 | 0.004 | 0.002 | 0.002 | 0.015 |
| Mo | 0.004 | 0.06 | 0.02 | 0.003 | 0.005 | 1.00 | 2.21 | 0.329 | 0.281 | 0.10 | 0.01 |
| Ti | 0.005 | 0.00 | 0.00 | 0.007 | 0.006 | 0.006 | 0.001 | 0.001 | 0.001 | 0.00 | 0.00 |
| Nb | 0.001 | 0.00 | 0.00 | 0.001 | 0.001 | 0.003 | 0.017 | 0.004 | 0.002 | 0.01 | 0.00 |
| Co | 0.010 | 0.01 | 0.01 | 0.009 | 0.015 | 0.017 | 0.220 | 0.156 | 0.274 | 0.26 | 0.02 |
| $N_2$ | 140 | 154 | 277 | 252 | 333 | 378 | 443 | 597 | 574 | 207 | 455 |

Table 3 notes
- Nitrogen concentration is written in ppm (micrograms of N per gram of steel).
- Si, Mn, Sn, Ni, Cu, Cr, P, Mo, Ti, Nb and Co have been analysed by XRF.
- C, S and N have been analysed using LECO automatic determinators.

Iron concentration has been computed by difference (100 % balance) for every steel, assuming the small error that can be made in this way.

1.3 Steel microstructure study

Metallografic samples from every selected material were taken and prepared for microstructure analysis. They were taken in the same structural state as they were going to be used as standards. The microstructure of every alloy was revealed with the appropriate etchant, in this particular instance, Vilella's reagent (for AISI 410LM, 410S, 420, 430, 434, CU 1, BAS 61 and BCS 290/2 steels), or a solution of 3 % nitric acid in ethanol [Nital] (for BAS 452/1 and BAS 409/1 steels) or an electrolytic etching in 10 % oxalic acid in distilled water solution media, applying 6 volts for 60 seconds (for AISI 304, 304 L, 310 and 316 steels) were used.

The system used for the steel microstructure study includes a REICHTER-JUNG MeF - 3 optical microscope.

Description:

- Observation techniques:

  Bright field, Dark field,
  Interference Contrast, Polarization.

- Photographic system:

  Built-in automatic 35 mm camera and 4x5" stand.
  Electronically controlled camera shutter and exposure time.

- Widefield eyepiece 10x WPK.
- Objectives:

  Plan Flour 2.5x/0.075.
  LWD Plan Flour 5x/0.10 Epi.
  LWD Plan Flour 10x/0.20 Epi 1K.
  Plan Flour 20x/0.40 Epi 1K.
  LWD Plan Flour 50x/0.85 Epi 1K.
  LWD Plan Flour 100x/0.90 Epi 1K.

- TV closed-circuit.

Additionally, conventional equipments and reagents for steel cutting, grinding, polishing and structure development have been used.

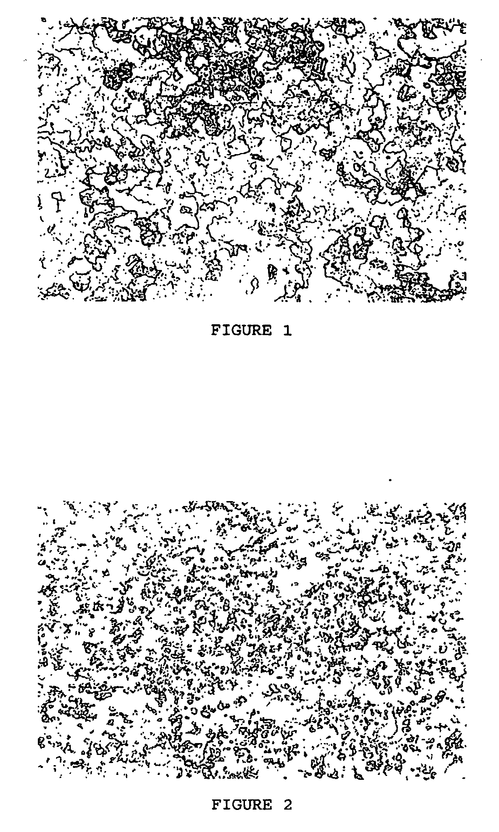

Figures 1 to 9 are photomicrographs showing the results from observations carried out on every metallographic sample, distinguishing among every different structure observed. Some particulars regarding reagent and conditions for structure development are included in the part entitled Brief Description Of Pictures, some comments regarding the most important observations have been also included.

The structure and present phase analysis has revealed that:

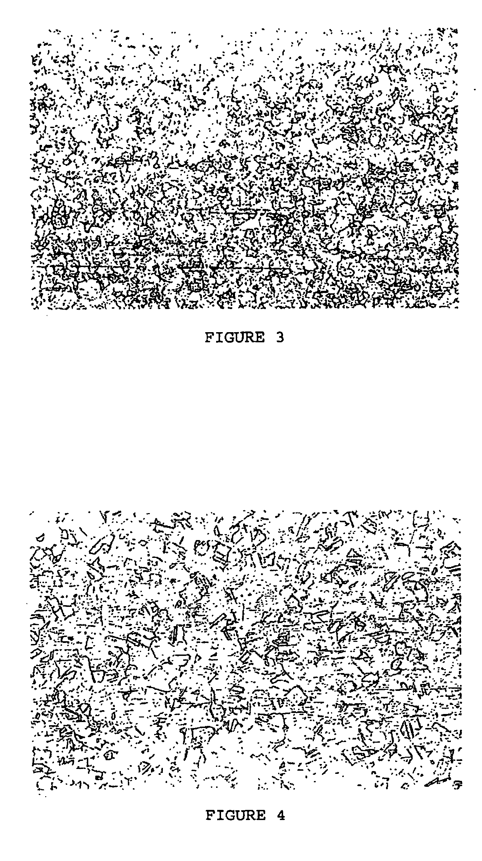

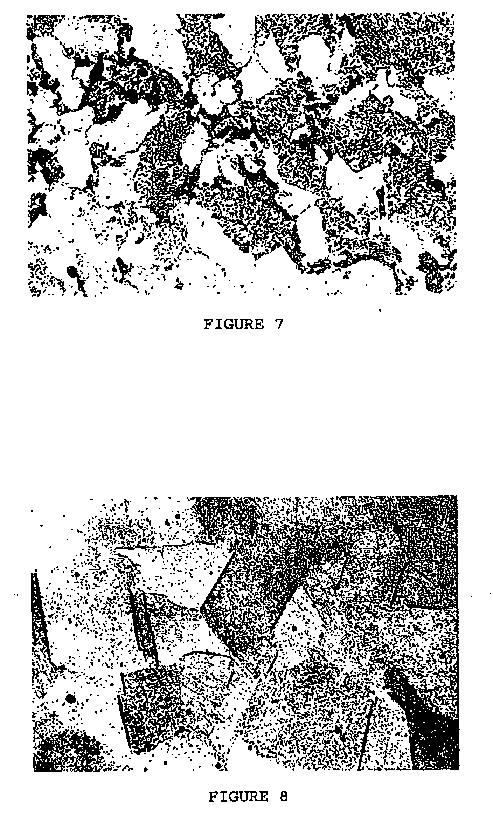

a) AISI 304, 304L, 310 and 316 steels (Figure 4) and BCS 290/2 (Figure 8) show a twinned grain austenitic structure. Any other phase is not seen in these structures, there is an insignificant level of non-metallic inclusions. These steel grades perfectly keep the requirements to be used as standards.

b) BCS 290/2 steel (Figure 8), has a relatively high level of sulphur, it should not be a problem because following the standard working method for EDS-SEM, if a sulphide inclusion appears, it is possible to change the acquisition area immediately; if a multipoint acquisition is being carried out, it is possible to reject the sulphide point. Anyway, it will be necessary to pay some special attention when analysing this standard.

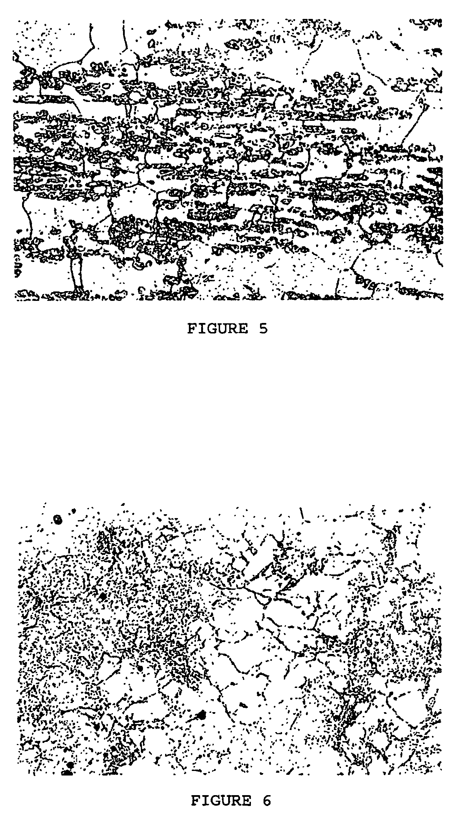

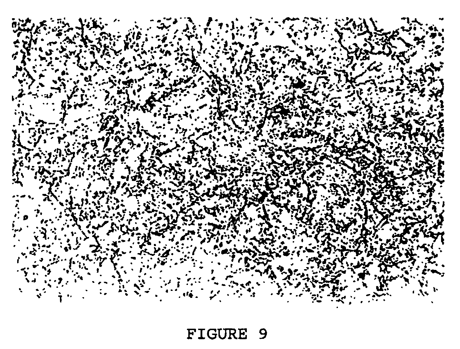

c) Ferritic steels, AISI 410LM and 410S (Figure 1), AISI 420 (Figure 2), AISI 430 and 434 (Figure 3), BAS 61 (Figure 6) and BAS 409/1 (Figure 9), show some variable amount of carbides, with a general formula $M_{23}C_6$ where M is any among the alloy metals, usually Cr. The size of these carbides is normally lower than 1 mm (micrometer). When a material presents this kind of microscopic heterogeneity (a lot of very small particles) and it is necessary to get representative data from its chemical composition, it is better to offer these results as a mean value, allowing a relatively high dispersion for some elements.

d) BAS 452/1 steel(Figure 7) presents a structure with Ferrite and two kinds of Pearlite. In this case, the same problem than in the previous one (for ferritic steels) will appear, but the allowed dispersion for obtained results can be greater. In spite of the difficulties, this steel was selected because it was the only one available with low manganese and near zero chromium contents.

e) CU 1 steel (Figure 5) presents a duplex structure with Ferrite and Martensite. In spite of having a biphasic structure, both phases have nearly the same chemical composition. This fact appears because at austenization temperature coexist ferrite and austenite with the same chemical composition, subsequently, during a fast cooling, austenite transforms into martensite without any diffusion of the alloy elements.

## EXAMPLE 2. Design and manufacture of a device to hold an alloy standard sample set for quantitative microanalysis of metal alloys of the same base

A device to hold standard samples taking the requirements described in part 4 of Detailed Description of the Invention into account, as it has been indicated above, was manufactured. To be exact, a device disc-shaped 25 mm in diameter and 9 mm high with 16 holes 3 mm in diameter to contain different standards (15, in this particular instance) was designed and made. Figure 10 shows a drawing of this device, also called Standards Disc, where the size of every constituent element of the device is indicated.

This device was made of titanium, the Faraday Cup was built closing the bottom of one of the 3 mm holes and covering the inner wall with graphite, so, all the incoming radiation is collected. This Faraday Cup is connected to an external device to measure the current density, usually installed in most SEM microscopes.

TABLE 4

| Chemical composition of standards Concentrations as weight percentage | | | | | | | | | | |
|---|---|---|---|---|---|---|---|---|---|---|
| AISI (ACX) | Si | Cr | Mn | Fe | Ni | Cu | Mo | C | N | Co |
| 410LM (485 | 0.27 | 11.03 | 0.86 | 87.34 | 0.38 | 0.07 | 0.00 | 0.01 | 0.01 | 0.01 |
| 410LM (585 | 0.31 | 11.16 | 0.52 | 87.02 | 0.82 | 0.07 | 0.06 | 0.01 | 0.02 | 0.01 |
| 410S (385 | 0.43 | 12.25 | 0.51 | 86.51 | 0.14 | 0.07 | 0.02 | 0.04 | 0.03 | 0.01 |
| 420 (365 | 0.45 | 13.42 | 0.83 | 84.78 | 0 .15 | 0.04 | 0.00 | 0.28 | 0.02 | 0.06 |
| 430 (500 | 0.32 | 16.32 | 0.37 | 82.67 | 0.16 | 0.04 | 0.00 | 0.06 | 0.03 | 0.01 |
| 434 (535 | 0.34 | 16.36 | 0.30 | 81.59 | 0.18 | 0.10 | 1.00 | 0.05 | 0.04 | 0.02 |
| 316 (250 | 0.27 | 17.06 | 1.15 | 68.06 | 10.69 | 0.23 | 2.21 | 0.04 | 0.04 | 0.22 |
| 304 (120 | 0.38 | 18.38 | 1.47 | 70.73 | 8.16 | 0.25 | 0.33 | 0.04 | 0.06 | 0.16 |
| 304L (200 | 0.38 | 18.29 | 1.36 | 69.87 | 9.26 | 0.19 | 0.28 | 0.02 | 0.06 | 0.27 |
| 310 (350 | 0.98 | 24.21 | 0.29 | 54.84 | 19.21 | 0.05 | 0.10 | 0.04 | 0.02 | 0.26 |
| CU 1 | 0.39 | 16.04 | 0.25 | 81.61 | 0 .17 | 1.43 | 0.01 | 0.03 | 0.05 | 0.02 |
| BAS 61 | 0.42 | 15.20 | 0.78 | 77.14 | 6.26 | 0.10 | 0.00 | 0.06 | --- | 0.04 |
| BAS 452/1 | 0.06 | 0.07 | 1.30 | 97.79 | 0.19 | 0.22 | 0.05 | 0.32 | --- | --- |
| BCS 290/2 | 0.34 | 0.16 | 12.50 | 85.01 | 0.29 | 0.17 | 0.03 | 1.15 | --- | 0.35 |
| BAS 409/1 | 1.46 | 0.94 | 0.44 | 93.31 | 3.06 | 0.05 | 0.65 | 0.08 | --- | 0.01 |
| Table 4 notes 1. - Iron concentrations present in the Table have been computed by difference. 2 . - Elements shown at the right side of the Table (C, N, Co) are not used in microanalysis. | | | | | | | | | | |

Steel coupons to be used as standards were machined up to a size lower than 3 mm thick and 9 mm high. These pieces were introduced in their holes and fixed by the bottom part with a polyester resin, on the upper part several drops of graphite conductive paint were added. Then, the standards disc was polished with diamond paste to get a mirror finishing and finally this set was covered with a thin film of carbon, about 5.0 nm thick.

In Table 4 the chemical compositions of the standards used have been summarized.

On the other hand, in general, microanalysis does not offer very good results when analysing elements which concentrations are lower than 0.1 % in weight, that is why lower concentrations are not considered.

**EXAMPLE 3. Use of a "device holding a standard sample set for quantitative microanalysis of the same base metal alloy" to calibrate an EDS-SEM system for quantitative microanalysis and to calculate calibration curves for Si, Cr, Mn, Fe, Ni, Cu and Mo in steels in a EDS-SEM system**

Once manufactured, the device described above was used to calculate calibration curves in a EDS-SEM coupled system, installed in ACERINOX, S. A. laboratories. The aim when calculating those curves was the improvement of precision and accuracy in steels microanalysis. It was carried out in the frame of a research project supported by the European Community for Steel and Coal, agreement no. 7210-GD/941.

EDS-SEM equipments used have been:

1) A scanning electron microscope, SEM, manufactured by HITACHI model S - 570 Large Stage.

- Equipped with a backscattered electron detector **ROBINSON RBH - 570 ML.**
- Acceleration Voltage: **0.5 to 30 KeV.**
- Magnification: **20 to 100000 x (WD = 35 mm).** o          **500 to 200000 x (WD = -2 mm).**
- Maximum resolution **3.5 nm** using secondary electron image, at 25 KeV and WD = -2 mm.
- Photography high resolution CRT. Equipped with MAMIYA 6x7 and POLAROID 545 cameras.

2) The microanalysis system attached to the SEM is manufactured by KEVEX model 8005 equipped with,

- Computer: **DIGITAL LSI 11/73.**
- Analysis Firmware: **KEVEX          v. 5.13.**
- EDS detector **KEVEX 3200-0212** with a Be window (8 mm thick).
- Automation: **SESAME          v. 4.9.**
- Resolution: **160 eV** in the **Mn Ka** line, at **5,90 KeV.**
- Software for quantitative chemical analysis.
        **QUANTEX          v. 6.13.**
        **SESAME APPLICATIONS v. 4.00.**
- Software for electron and optical image acquisition.
        **ADVANCE IMAGING          v. 5.60.**
- Software for image analysis.
        **PROGRAM AUTOMATED ANALYSIS          v. 2.3.**

After the optimization of geometric variables of the system used which, in general, are determined by the equipment manufacturers, an optimization of the electronic variables used in microanalysis was carried out, in order to optimize spectra acquisition. To do this, the following procedure was used:

a) acquisition of 20 spectra from one of the steels present in the Standard Disc, taking into account that each one must be, at least, 2 μm far from any strange particle observed; and
b) treatment of each acquired spectrum to:

i) remove escape peaks due to the detector;
ii) remove background; and
iii) obtain net intensities for each element present in the spectrum.

The software used is Quantex, by KEVEX, the mean and the standard deviation of each value are obtained and those ones which separate more than twice the standard deviation are removed; with the rest, of the values a new mean value and a new standard deviation are obtained. The addition of the relative errors from all elements is the parameter which indicates the goodness of the analysis conditions used.

In Table 5 the ranges studied for each variable and the optimum values obtained for quantitative microanalysis of iron-based alloys in the EDS-SEM system used, are summarized.

TABLE 5

| Optimized electronic variables | | | | |
|---|---|---|---|---|
| | Time Constant (μs) | Acceleration Voltage (kV) | X Ray Entrance Density (c/s) | Acquisition Time (s) |
| Range | 1.5 to 12 | 10 to 25 | 2000 to 4000 | 100 to 300 |
| Optimum | 4.5 | 15 | 3500 | 250 |

Once the spectrum acquisition procedure is optimized, the system is calibrated, first, net intensities from all the interesting elements of each material in the Standard Disc were acquired, according to the previously tuned and described working method.

With these data, regression curves between intensities and certified concentrations of steels were constructed. Several mathematical adjusting models were checked and one of them was selected due to its _better correlation coefficient_ and _less error index_. This model is expressed by means of the equation [4] previously shown. The regression coefficients to apply with this model appear in Table 6.

## TABLE 6

### Regression coefficients to compute element concentrations

$$CSi = I_{Si} * (0.071005 - 9.22412*10^{-5} * I_{Cr} + 4.041954*10^{-4} * I_{Ni} - 0.010173 * I_{Cu} - 5.35274*10^{-4} * I_{Mo}) + I_{Si}^2 * (-0.001187 - 2.33173*10^{-6} * I_{Mn} + 4.608805*10^{-7} * I_{Fe} + 2.072438*10^{-4} * I_{Cu}) + 0.001203 * I_{Cr} - 0.0005286 * I_{Fe} - 0.007295 * I_{Ni} + 0.117336 * I_{Cu} + 0.005269 * I_{Mo}$$

$$CCr = I_{Cr} * (0.089466 - 2.11932*10^{-5} * I_{Fe} + 2.687408*10^{-4} * I_{Cu}) + I_{Cr}^2 * (-6.53084*10^{-8} * I_{Fe}) - 0.017253 * I_{Ni}$$

$$CMn = I_{Mn} * (0.119765 - 3.56891*10^{-5} * I_{Cr} - 4.7344*10^{-5} * I_{Fe} - 9.5186*10^{-4} * I_{Cu} - 2.05444*10^{-4} * I_{Mo}) + I_{Mn}^2 * (-2.74131*10^{-6} * I_{Si} + 1.246452*10^{-5} * I_{Cu} + 4.915566*10^{-6} * I_{Mo})$$

$$CFe = I_{Fe} * (0.16073 - 1.96503*10^{-4} * I_{Mn} - 1.22207*10^{-4} * I_{Ni} - 0.003138 * I_{Cu}) + I_{Fe}^2 * (-6.33967*10^{-5} + 1.255516*10^{-7} * I_{Si} - 3.30484*10^{-8} * I_{Cr} + 1.266819*10^{-7} * I_{Mn}) - 0.239584 * I_{Si} + 2.714082 * I_{Cu} - 0.045985 * I_{Mo}$$

$$CNi = I_{Ni} * (0.163309 + 1.287976*10^{-4} * I_{Cr} - 2.90707*10^{-5} * I_{Fe} + 0.002709 * I_{Cu} + 0.002959 * I_{Mo}) + I_{Ni}^2 * (-1.23344*10^{-5} * I_{Mn} - 4.56151*10^{-7} * I_{Fe} - 6.25772*10^{-5} * I_{Cu} - 3.62547*10^{-5} * I_{Mo}) - 1.88144*10^{-4} * I_{Cr}$$

$$CCu = I_{Cu} * (0.142231 - 0.003718 * I_{Si} + 9.665617*10^{-4} * I_{Cr} - 0.003256 * I_{Ni} - 0.005956 * I_{Mo}) + I_{Cu}^2 * (0.043968 + 3.843622*10^{-4} * I_{Si} - 9.24373*10^{-5} * I_{Cr} - 3.12929*10^{-5} * I_{Fe} + 1.304469 * I_{Ni}) - 0.001257 * I_{Cr} + 0.004112 * I_{Ni} + 0.012005 * I_{Mo}$$

$$CMo = I_{Mo} * (0.205757 - 1.65551*10^{-4} * I_{Cr} - 7.51323*10^{-5} * I_{Fe}) + I_{Mo}^2 * (-6.34999*10^{-5} * I_{Si} - 6.85643*10^{-5} * I_{Mn} + 1.060763*10^{-6} * I_{Fe} + 1.004987*10^{-5} * I_{Ni}) - 1.99955*10^{-4} * I_{Fe} + 0.015754 * I_{Cu}$$

The regression applicability parameters are summarized in Table 7, where the results obtained with other traditional techniques, such as ZAF quantitation for microanalysis and XRF with EDS detectors for macroanalysis have been included.

According to the Table, a quantitative improvement of the results obtained, between 31% and 81% in this case, regarding those attainable with ZAF quantitation is observed. The results obtained are close to those attainable by a macroanalysis technique such as XRF-EDS.

TABLE 7

| Comparison of results obtained with proposed method, K, to those attainable by XRF-EDS and ZAF | | | | | | | |
|---|---|---|---|---|---|---|---|
| **EL.** | **Si** | **Cr** | **Mn** | **Fe** | **Ni** | **Cu** | **Mo** |
| **Er.$_K$** | 0.018 | 0.229 | 0.019 | 0.264 | 0.033 | 0.016 | 0.015 |
| **Er.$_{ZAF}$** | 0.065 | 0.333 | 0.077 | 0.506 | 0.135 | 0.057 | 0.079 |
| **Er.$_{FRX}$** | 0.010 | 0.020 | 0.024 | 0.210 | 0.006 | 0.024 | 0.010 |
| **2$\sigma$ (K)** | 0.077 | 1.202 | 0.203 | 1.484 | 0.296 | 0.132 | 0.120 |
| **L(Io)** | 0.00 | 0.00 | 0.00 | 55.00 | 0.00 | 0.00 | 0.00 |
| **L(up)** | 1.50 | 25.00 | 12.50 | 100.00 | 20.00 | 1.50 | 2.50 |

Table 7 notes
- **Er.$_K$**, Mean of absolute errors between certified and computed concentrations for the regression technique used with the device proposed.
- **Er.$_{ZAF}$**, The same for data quantified by ZAF method.
- **Er.$_{FRX}$**, The same for data acquired and quantified by XRF-EDS system.
- **2$\sigma$ (K)**, 95% confidence interval for the regression results with the proposed model.
- **L(Io)** and **L (up)**, Lower and upper limit in the regression curve.

**EXAMPLE 4. Application of "The X-ray quantitative microanalysis method of metal alloys based on a metal alloy standard sample set and a mathematical adjusting method" to the determination of Si, Cr, Mn, Fe, Ni, Cu and Mo contents in an unknown composition steels**

To evaluate the analysis method applicability to the determination of an unknown sample chemical composition, a different steel from those ones in the Standard Disc was chosen. Its chemical composition was analysed both by XRF and according to the new microanalysis method supplied by this invention. The results obtained with both methods are compared. The chosen steel follows the ACERINOX grade ACX 140; included in the AISI 304 standard.

4.1 Chemical composition determined by XRF of an ACX 140 steel grade (03LB65)

The steel sample was analysed following the standards NDT-8006, "Use of Philips 1600/10 simultaneous X Ray Fluorescence Spectrometer [XRF]" and NDT-8012, Analytical sample processes in Steelmaking Laboratory"; already cited. The obtained results appear in Table 8.

TABLE 8

| XRF chemical composition of a steel, ref. 03LB65. (Weight percentage) | | | | | | | |
|---|---|---|---|---|---|---|---|
| **EL.** | **Si** | **Mn** | **Sn** | **Ni** | **Cu** | **Cr** | **P** |
|  | 0.410 | 1.120 | 0.013 | 8.67 | 0.295 | 17.520 | 0.028 |
| **EL.** | **Mo** | **Ti** | **Nb** | **Co** | **C** | **S** | **N** |
|  | 0.280 | 0.012 | 0.010 | 0.089 | 0.039 | 0.002 | 0.0443 |

Table 8 notes
    C, S and N are determined by means of automatic analysers. The rest of the elements area analysed by XRF. Iron is not analysed, but calculated by balance up to 100%.

By means of EDS-SEM microanalysis it is only possible to quantify those elements of more than 0.1 wpc (weight percentage), so, Sn, P, Ti, Nb, Co, C, S, and N will not be determined.
As previously stated, Fe is detected by EDS with the other elements. As it is necessary to give a value, its concentration is computed by difference and, in this case, it turned out to be 71.53%.

4.2 Sample preparation to determine chemical composition by EDS-SEM

It is essential that the sample surface state is as similar as possible to the standard surface state, so, the sample was mechanically polished by normal metallographic procedures up to a mirror finishing with diamond paste.

4.3 Acquisition of average net intensities from the specimen

Once the sample has been polished, it is introduced inside the SEM microscope sample holder chamber and the geometric variables are adjusted to their recommended values, following, the normal technique working method, described by the manufacturer.

It is not necessary that the Standard Disc is inside the sample holder chamber.

Next, the electronic variables are fixed to their optimum values, previously described, and the electron emission current is allowed to stabilize, which, in this particular development takes 90 minutes. Then, 20 spectra from the unknown sample (or from each specimen) are acquired, considering that each one is at least 2 $\mu$m far from any strange particle.

The present elements net intensities are extracted by eliminating escape peaks and background and applying the deconvolution algorithm, according to the X-ray detector software manufacturer instructions.

Measured intensities average and standard deviation for each element are computed and those analysis points which have any intensity value far from its mean value more than twice its standard deviation are removed from the data base. The rest of the net intensity values will be used to compute the concentration.

4.4 EDS-SEM data adjusting program based on equations in Table 6

From this moment, the only thing to do is to introduce the measured element intensities into the formulae described in Table 6 to calculate the percentage composition of the specimen.

To make the calculation easier, the procedure more agile and avoid mistakes, it can be done by means of a computer program which takes the intensity data base and gives the chemical composition as a result.

In a particular fulfilment, in our laboratories, we have developed a BASIC language programme as an example of net intensity data adjusting to analysed elements concentrations. This programme admits, as an entrance, a file where net intensity data base are and, in the exit, gives, in a file, concentration calculations for each analysed point as well as the average and confidence interval for each element.

As an example, the programme used in this especial case is the following:

```
REM     BASIC PROGRAMME MICUAN.BAS

REM Data Input

'Regression Constants

KSi = .071005: KSiCr = -9.22412E-05: KSiMn = 0:
KSiFe = 0: KSiNi = 4.041954E-04: KSiCu = -.010173:
KSiMo = -5.35274E-04
KSiSi = -.001187: KSiSiCr = 0: KSiSiMn = -2.33173E-
06: KSiSiFe = 4.608805E-07: KSiSiNi = 0: KSiSiCu =
2.072438E-04: KSiSiMo = 0
KCr = .001203: KMn = 0: KFe = -.0005286: KNi = -
.007295: KCu = .117336: KMo = .005269

LCr = .089466: LCrSi = 0: LCrMn = 0: LCrFe = -
2.11932E-05: LCrNi = 0: LCrCu = 2.687408E-04: LCrMo
= 0
```

EP 0 742 434 B1

*LCrCr = 0: LCrCrSi = 0: LCrCrMn = 0: LCrCrFe = -6.53084E-08: LCrCrNi = 0: LCrCrCu = 0: LCrCrMo = 0*
*LSi = 0: LMn = 0: LFe = 0: LNi = -.017253: LCu = 0: LMo = 0*

*MMn = .119765: MMnSi = 0: MMnCr = -3.56891E-05: MMnFe = -4.7344E-05: MMnNi = 0: MMnCu = -9.5186E-04: MMnMo = -2.05444E-04*
*MMnMn = 0: MMnMnSi = -2.74131E-06: MMnMnCr = 0: MMnMnFe = 0: MMnMnNi = 0: MMnMnCu = 1.246452E-05: MMnMnMo = 4.915566E-06*
*MSi = 0: MCr = 0: MFe = 0: MNi = 0: MCu = 0: MMo = 0*

*NFe = .16073: NFeSi = 0: NFeCr = 0: NFeMn = -1.96503E-04: NFeNi = -1.22207E-04: NFeCu = -.003138: NFeMo = 0*
*NFeFe = -6.33967E-05: NFeFeSi = 1.255516E-07: NFeFeCr = -3.30484E-08: NFeFeMn = 1.266819E-07: NFeFeNi = 0: NFeFeCu = 0: NFeFeMo = 0*
*NSi = -.239584: NCr = 0: NMn = 0: NNi = 0: NCu = 2.714082: NMo = -.045985*

*ONi = .163309: ONiSi = 0: ONiCr = 1.287976E-04: ONiMn = 0: ONiFe = -2.90707E-05: ONiCu = .002709: ONiMo = .002959*
*ONiNi = 0: ONiNiSi = 0: ONiNiCr = 0: ONiNiMn = -1.23344E-05: ONiNiFe = -4.56151E-07: ONiNiCu = -6.25772E-05: ONiNiMo = -3.62547E-05*
*OSi = 0: OCr = -1.88144E-04: OMn = 0: OFe = 0: OCu = 0: OMo = 0*

*PCu = .142231: PCuSi = -.003718: PCuCr = 9.665617E-04: PCuMn = 0: PCuFe = 0: PCuNi = -.003256: PCuMo = -.005956*
*PCuCu = .043968: PCuCuSi = 3.843622E-04: PCuCuCr = -9.24373E-05: PCuCuMn = 0: PCuCuFe = -3.12929E-05: PCuCuNi = 1.304469E-04: PCuCuMo = 0*
*PSi = 0: PCr = -.001257: PMn = 0: PFe = 0: PNi = .004112: PMo = .012005*

21

```
QMo = .205757: QMoSi = 0: QMoCr = -1.65551E-04:
QMoMn = 0: QMoFe = -7.51323E-05: QMoNi = 0: QMoCu =
0
QMoMo = 0: QMoMoSi = -6.34999E-05: QMoMoCr = 0:
QMoMoMn = -6.85643E-05: QMoMoFe = 1.060763E-06:
QMoMoNi = 1.004987E-05: QMoMoCu = 0
QSi = 0: QCr = 0: QMn = 0: QFe = -1.99955E-04: QNi
= 0: QCu = .015754



COMIENZO:
CLS


Fm$ = ""
INPUT ; "Specimen Id. (press < S > to Exit) : ",
Fm$: PRINT : PRINT


        IF UCASE$(Fm$) = "S" THEN SYSTEM



REM Results Output

'Output file


SALIDA:
CLS
PRINT : PRINT
PRINT    "THE    OUTPUT    FILES    ARE    STORED    IN
C:\MICUAN\SALIDA.REG\": PRINT : PRINT
PRINT "Introduce the name of the output file:   (
Def= "; Fm$; " )"; : INPUT sali$
IF sali$ = "" THEN sali$ = Fm$
IF sali$ = "" THEN PRINT "ERROR: you must introduce
a  name.":  PRINT  "press  any  key  to  continue":
continua$ = INPUT$(1): GOTO SALIDA


'Data input from a file


CLS
PRINT : PRINT
PRINT    "THE    INPUT    FILES    MUST    BE    IN
'C:\MICUAN\DATOS',": PRINT : PRINT
```

```
PRINT "Introduce the name of the input file:    (
Def= "; Fm$; " )"; : INPUT entr$
IF entr$ = "" THEN entr$ = Fm$
IF entr$ = "" THEN PRINT "ERROR: you must introduce
a  name.": PRINT "press  any  key  to  continue":
continua$ = INPUT$(1): GOTO SALIDA

entra$ = "C:\MICUAN\DATOS\" + entr$
salid$ = "C:\MICUAN\SALIDA.REG\" + sali$

'data reading and results output
OPEN salid$ FOR APPEND ACCESS WRITE AS #1
OPEN entra$ FOR INPUT ACCESS READ AS #2


'Mean Value

MedSi = 0: MedCr = 0: MedMn = 0: MedFe = 0: MedNi =
0: MedCu = 0: MedMo = 0

'beginning of the output file writing

PRINT #1, "            Specimen Identification", Fm$
PRINT #1,
PRINT #1,
PRINT #1,
PRINT #1, "         N§      Si        Cr        Mn
  Fe        Ni      Cu        Mo"
PRINT #1, "        --------------------------------
--------------------------------"


'counter beginning
I = 0

'cycle
CICLO:

INPUT #2, N: IF N = 0 THEN GOTO PROMEDIO

INPUT #2, Si, Cr, Mn, Fe, Ni, Cu, Mo
```

```
'cycle counter
I = I + 1


REM Element concentration computing

CSi = Si * (KSi + KSiCr * Cr + KSiMn * Mn + KSiFe *
Fe + KSiNi * Ni + KSiCu * Cu + KSiMo * Mo) + Si *
Si * (KSiSi + KSiSiCr * Cr + KSiSiMn * Mn + KSiSiFe
* Fe + KSiSiNi * Ni + KSiSiCu * Cu + KSiSiMo * Mo)
+ KCr * Cr + KMn * Mn + KFe * Fe + KNi * Ni + KCu *
Cu + KMo * Mo
CCr = Cr * (LCr + LCrSi * Si + LCrMn * Mn + LCrFe *
Fe + LCrNi * Ni + LCrCu * Cu + LCrMo * Mo) + Cr *
Cr * (LCrCr + LCrCrSi * Si + LCrCrMn * Mn + LCrCrFe
* Fe + LCrCrNi * Ni + LCrCrCu * Cu + LCrCrMo * Mo)
+ LSi * Si + LMn * Mn + LFe * Fe + LNi * Ni + LCu *
Cu + LMo * Mo
CMn = Mn * (MMn + MMnSi * Si + MMnCr * Cr + MMnFe *
Fe + MMnNi * Ni + MMnCu * Cu + MMnMo * Mo) + Mn *
Mn * (MMnMn + MMnMnSi * Si + MMnMnCr * Cr + MMnMnFe
* Fe + MMnMnNi * Ni + MMnMnCu * Cu + MMnMnMo * Mo)
+ MSi * Si + MCr * Cr + MFe * Fe + MNi * Ni + MCu *
Cu + MMo * Mo
CFe = Fe * (NFe + NFeSi * Si + NFeCr * Cr + NFeMn *
Mn + NFeNi * Ni + NFeCu * Cu + NFeMo * Mo) + Fe *
Fe * (NFeFe + NFeFeSi * Si + NFeFeCr * Cr + NFeFeMn
* Mn + NFeFeNi * Ni + NFeFeCu * Cu + NFeFeMo * Mo)
+ NSi * Si + NCr * Cr + NMn * Mn + NNi * Ni + NCu *
Cu + NMo * Mo
CNi = Ni * (ONi + ONiSi * Si + ONiCr * Cr + ONiMn *
Mn + ONiFe * Fe + ONiCu * Cu + ONiMo * Mo) + Ni *
Ni * (ONiNi + ONiNiSi * Si + ONiNiCr * Cr + ONiNiMn
* Mn + ONiNiFe * Fe + ONiNiCu * Cu + ONiNiMo * Mo)
+ OSi * Si + OCr * Cr + OMn * Mn + OFe * Fe + OCu *
Cu + OMo * Mo
CCu = Cu * (PCu + PCuSi * Si + PCuCr * Cr + PCuMn *
Mn + PCuFe * Fe + PCuNi * Ni + PCuMo * Mo) + Cu *
Cu * (PCuCu + PCuCuSi * Si + PCuCuCr * Cr + PCuCuMn
* Mn + PCuCuFe * Fe + PCuCuNi * Ni + PCuCuMo * Mo)
+ PSi * Si + PCr * Cr + PMn * Mn + PFe * Fe + PNi *
Ni + PMo * Mo
```

```
CMo = Mo * (QMo + QMoSi * Si + QMoCr * Cr + QMoMn *
Mn + QMoFe * Fe + QMoNi * Ni + QMoCu * Cu) + Mo *
Mo * (QMoMo + QMoMoSi * Si + QMoMoCr * Cr + QMoMoMn
* Mn + QMoMoFe * Fe + QMoMoNi * Ni + QMoMoCu * Cu)
+ QSi * Si + QCr * Cr + QMn * Mn + QFe * Fe + QNi *
Ni + QCu * Cu

PRINT #1, "            "; : PRINT #1, USING "##"; N; :
PRINT #1, "      ";
PRINT #1, USING "###.##"; CSi; : PRINT #1, "    ";
PRINT #1, USING "###.##"; CCr; : PRINT #1, "    ";
PRINT #1, USING "###.##"; CMn; : PRINT #1, "    ";
PRINT #1, USING "###.##"; CFe; : PRINT #1, "    ";
PRINT #1, USING "###.##"; CNi; : PRINT #1, "    ";
PRINT #1, USING "###.##"; CCu; : PRINT #1, "    ";
PRINT #1, USING "###.##"; CMo; : PRINT #1,

'Mean Value (addition of results up to cycle i)

MedSi = MedSi + CSi: MedCr = MedCr + CCr: MedMn =
MedMn + CMn: MedFe = MedFe + CFe: MedNi = MedNi +
CNi: MedCu = MedCu + CCu: MedMo = MedMo + CMo

IF EOF(2) > 0 THEN GOTO PROMEDIO
'next cycle
GOTO CICLO

PROMEDIO:

'Mean Value computing

PmedSi = MedSi / I: PmedCr = MedCr / I: PmedMn =
MedMn / I: PmedFe = MedFe / I: PmedNi = MedNi / I:
PmedCu = MedCu / I: PmedMo = MedMo / I:

'Mean value output

PRINT #1, "          =============================
====================================="
PRINT #1, "        Med =       "; : PRINT #1, USING
"###.##"; PmedSi; : PRINT #1, "    ";
```

```
PRINT #1, USING "###.##"; PmedCr; : PRINT #1, "
";
PRINT #1, USING "###.##"; PmedMn; : PRINT #1, "
";
PRINT #1, USING "###.##"; PmedFe; : PRINT #1, "
";
PRINT #1, USING "###.##"; PmedNi; : PRINT #1, "
";
PRINT #1, USING "###.##"; PmedCu; : PRINT #1, "
";
PRINT #1, USING "###.##"; PmedMo; : PRINT #1,


'Standard Deviation Output, by Elements
PRINT #1,
PRINT #1, "Es.Dev. =      "; : PRINT #1, "±0.077"; :
PRINT #1, "     ";
PRINT #1, "±1.202"; : PRINT #1, "     ";
PRINT #1, "±0.203"; : PRINT #1, "     ";
PRINT #1, "±1.484"; : PRINT #1, "     ";
PRINT #1, "±0.296"; : PRINT #1, "     ";
PRINT #1, "±0.132"; : PRINT #1, "     ";
PRINT #1, "±0.120"; : PRINT #1,


CLOSE

PRINT : PRINT : PRINT

INPUT " Do you wish to execute ·this programme
again? ( Def= Yes )"; cic$
IF cic$ = "" THEN cic$ = "YES"
IF UCASE$(cic$) = "YES" OR UCASE$(cic$) = "Y" THEN
GOTO COMIENZO

REM Output

SYSTEM

END
```

4.5 Chemical composition calculations. by means of the new proposed microanalysis method, of an ACX 140 steel grade (03LB65)

Following the indications described in Examples 4.2 and 4.3, a steel sample was prepared and analysed (in this case, the very sample previously analysed by XRF was taken, to avoid any external influence), then, using the programme described in section 4.4 the sample chemical composition was computed. The results appear in Table 9, where the composition obtained by XRF and the error have also been included.

TABLE 9

| Chemical composition of a steel, ref. 03LB65.<br>Concentrations as weight percentage. | | | | | | | |
|---|---|---|---|---|---|---|---|
| **EL.** | **Si** | **Cr** | **Mn** | **Fe** | **Ni** | **Cu** | **Mo** |
| **Mic.K** | 0.36 | 16.73 | 1.07 | 72.33 | 8.96 | 0.21 | 0.20 |
| **XRF** | **0.41** | **17.52** | **1.12** | **71.53*** | **8.67** | **0.30** | **0.28** |
| **Er(K).** | 0.05 | 0.79 | 0.05 | -0.80 | -0.29 | 0.09 | 0.08 |
| **2s(K)** | 0.077 | 1.202 | 0.203 | 1.484 | 0.296 | 0.132 | 0.120 |
| **ZAF** | 1.09 | 18.36 | 1.16 | 71.25 | 7.33 | 0.30 | 0.51 |

Table 9 notes
Mic.K.- Chemical composition calculated by the proposed method.
XRF.- Chemical composition calculated by XRF.
*.- Iron concentration computed by difference.
Er(K).- Difference between chemical composition computed by both techniques.
2s(K).- 95 % confidence interval for the calibration according to the proposed method.
ZAF.- Chemical composition computed according to ZAF quantitation.

As it can be observed, the results obtained with the unknown sample are within the admitted error interval and, besides, in general, are better than those obtained with ZAF quantitation (in this case, the results are also an average of 20 analysis to make the datum comparative, although this is not the normal way to work with ZAF), especially for Si, Ni and Mo.

4.6 Method monitoring

This method, as all regression methods of instrumental analytical techniques, is subject to the influence of external factors, some of them known and others unknown, as well as to erratic variations, so, periodically, it is necessary to check the regression coefficients adjusting degree for the different analysed elements. If the method is used continuously, it is advisable to check, or monitor, at least once a month. The monitoring is done taking a sample of a material which composition is correctly known and is adjusted to the necessary requirements of absence of other elements in the composition in detectable quantity.
The chemical composition of this sample is analysed as if it were unknown and it is compared to the reference value.
If any value goes out of the allowed confidence interval, it is necessary to calibrate, according to the procedure described in Example 3.
When the method is used from time to time, if the last monitoring was done more than one month ago, it is necessary to monitor again before measurement, and it is done according to the procedure and criterion previously described.

**BIBLIOGRAPHY.**

Almagro, J. F.; Botella, J.; Lobato, J. M. **1995.** *"Improved Quantitative Microanalysis of Steels by EDX-SEM.*", Proc. Of the Fourth Intl. Conf. on Progress in Analytical Chemistry in Steel and Metal Industries. Ed. R. Nauche, European Commission, (1996), 508.
Agarwal, B. K. **1991.** *X-Ray Spectroscopy. An Introduction*. Sec. Ed. Springer series in optical sciences; v. 15. Ed. Springer-Verlag, Berlin Heidelberg, 304.
Balser, J.; Meltzer, C. **1985.** *Minimum Detection Limit in EDS: An Empirical Analysis.* Kevex Monograph 2. Kevex Corporation, Foster City, California.
Barba, C.; Baldonedo, J. L.; García-Alvarez, F. **1991.** *Determinación de la resolución espacial y de los factores K de Cliff-Lorimer en un microscopio JEOL-2000 FX*. Rev. Metal. Madrid, 27(6), 397.
Castaign, R. **1951.** Ph. D. Thesis, University of Paris.
Cliff, G.; Lorimer, G. W. **1975.** J. Microsc., 103, 203.

Colby, J. W. **1968.** Adv. X-Ray Anal. 11, 287.

Duncumb, P.; Shield, P. K. **1966.** *The Electron Microprobe.* Eds. T.D. Mc Kinley, K.F.J. Heinrich and D.B. Wittry, John Wiley, New York, 284.

Dyson, D. J. **1988.** *Electron Optical and Association of Chemical Analysis.*

*Energy Dispersive X-Ray Microanalysis. An Introduction*. **1983.** Kevex Corporation, Foster City, California.

Feliú, S. **1993.** *Técnicas de análisis de superficies por espectroscopía electrónica. Conceptos y aplicaciones Generales.* Rev. Metal. Madrid, 29(5), 307.

Fernando, L. A.; Zaremski, D. A. **1986.** *Electron spectroscopy in an industrial laboratory.* Spectrochimica Acta. 41B(6), 611.

Geiss, R. **1988.** *Analytical Technique*. Microanalysis Analytical Course. Kevex Corporation, Foster City, California.

Goldstein, J. I.; Hanneman, R. E.; Ogilvie, R. E. **1965.** Trans. Met.Soc. AIME 233, 812.

Goldstein, J. I.; Newbury, D. E.; Echlin, P.; Joy, D. C.; Fiori, C.; Lifshin, E. **1981.** *Scanning Electron Microscopy* and *X-Ray Microanalysis.* Ed. Plenum Press, New York, 451.

Heinrich, K. F. J.; Newbury, D. E. **1986.** *Electron Probe X-Ray Microanalysis.* Metals Handbook. Ninth Edition. Volume 10. Material Characterization. ASM, 524.

Henoc, J.; Heinrich, K. F. J.; Myklebust, R. L. **1973.** *A Rigorous Correction Procedure for Quantitative Electron Probe Microanalysis (COR 2)*. NBS Technical Note 769, National Boureau of Standards, Gaithersburg, MD.

Isakozawa, S.; Kobayashi, H. **1991.** European Patent Application number 90113786.9. Publication number 0 409 209 A2.

*KEVEX MICROANALYSIS LAB MANUAL*. **1987.** Kevex Corporation, Foster City, California.

*KEVEX QUANTEX SOFTWARE REFERENCE MANUAL*. **1986.** Kevex Corporation, Foster City, California.

Marinenko, R. B.; Heinrich, K. F. J.; Ruegg, F. C. **1979.** *Micro-Homogeneity Studies of NBS Standards Reference Materials, NBS Research Materials, and Other Related Samples.* NBS Special Publication 260-65, National Boureau of Standards, Gaithersburg, MD.

Myklebust, R. L. ; Yakowitz, H.; Heinrich, K. F. J. **1973.** *Proc. 8$^{th}$ Nat. Conf. Elec. Probe Anal*. New Orleans, Louisiana, Pap. 26.

Newbury, D. E.; Fiori, C. E.; Marinenko, R. B.; Myklebust, R. L.; Swyt, C. R.; Bright, D. S. **1990**. "Compositional Mapping with the Electron Probe Microanalyzer: Part I." Anal. Chem. 62 (22), 1159A-1166A.

Philibert, J. **1963.** *Proc. 3$^{rd}$ Intl. Symp. X-Ray Optics and X-Ray Microanalysis.* Stanford University, eds. H.H. Pattee, V.E. Cosslett and A. Engström, Academic. New York, 379.

Poehn, Ch.; Wernisch, J.; Henke, W. **1985.** X-Ray Spectrometry, 14, 120.

Pouchou, J. L. **1994.** *X-Ray Microanalysis of Stratified Specimens*. Office National d'Etudes et Recherches Aérospatiales, CHATILLON (France). Internal Communication.

Rickerby, D. G.; Thiot, J. F. **1994.** Mikrochim Acta 114/115, 421.

Russ, J. C. **1974.** *Proceeding of the 9th Annual Conference of the Electron Probe Society of America*, Ottawa, Canada, 22.

Wernisch, J.; Poehn, Ch. **1985.** X-Ray Spectrometry, 14, 43.

Wintsch, W.; Rose, M. R.; Gloor, F., "Coupling of Energy-dispersive and Wavelength-dispersive Spectrometers by Use of a Central Computer with an Electron Microprobe Analyser". Mikrochim. Acta (Wien), I/1-2, 63-72.

Wittry, D. B. **1963**. ASTM STP 349, Philadelphia, Pennsylvania, 128.

Wong, W. 1988. *Geometry. Parameters of the Detector, Specimen & Column*. Microanalysis Analytical Course. Kevex Corporation, Foster City, California.

Yakowitz, H.; Myklebust, R. L.; Heinrich, K. F. J. **1973.** *FRAME: An Online Correction Procedure for Quantitative Electron Probe Microanalysis.* NBS Technical Note 796, National Boureau of Standards, Gaithersburg, MD.

Ziebold, T. O.; Ogilvie, R. E. **1964.** Anal. Chem., 36, 322.

**Claims**

1. A method for metal alloy quantitative microanalysis based on an X-ray analysis system using an energy dispersive X-ray detector (EDS) coupled to a scanning electron microscope (SEM), which comprises:

    a) to prepare a device holding a standard sample set for quantitative microanalysis of the alloy at issue, designed to be used in an X-ray analysis system using EDS coupled to a SEM microscope;

    b) to calibrate the quantitative microanalysis system with such a standard device by optimizing the geometric and electronic variables of the microanalysis system, and to establish an adjusting equation which relates mathematically the net intensities of the analysed elements and the percentage composition of the standard test material;

c) to prepare each sample to be analysed by subjecting said samples to substantially the same treatment as the one applied to the standard samples of the standard device;

d) to introduce each sample to be analysed, once prepared, in the SEM sample holder;

e) to fix the geometric and electronic variables of the EDS-SEM quantitative microanalysis system, said electronic variables consisting in the multichannel analyser time constant, the acceleration voltage, the X-ray entrance density (input rate), and the acquisition time;

f) to acquire a certain number of spectra from each sample to be analysed and to treat the acquired data to get the net intensities of each element present in the spectrum, wherein the net intensities of each element present in the spectrum are extracted by eliminating escape peaks and background and applying a deconvolution algorithm; and

g) to introduce the net intensity values in the above defined adjusting equation which relates mathematically the element net intensities to the percentage composition of the unknown sample, wherein said adjusting equation is a multivariable regression model identified as [4]

$$C_i = (K_i + \Sigma_{j=selec}K'_j I_j)I_i + (K'_i + \Sigma_{j=selec}K''_j I_j)\ I_i^2 + + \Sigma_{j=selec}K_j I_j \qquad [4]$$

wherein

$C_i$ is the weight fraction of i element;
$I_i$ is the net intensity measured from element i;
$I_j$ is the net intensity measured from element j in the same sample;
$K_i$, $K'_i$, $K_j$, $K'_j$, $K''_j$ are the regression model adjusting constants in the data acquisition conditions; and
the "j=selec" subindex means that only the variables offering statistically optimum results are selected.

2. Method according to claim 1, wherein said metal alloy is a steel or an iron based alloy.

3. Method according to claim 1, wherein said standard device hold a set of chemically and structurally homogeneous steels for use as standards in EDS-SEM quantitative microanalysis.

4. Method according to claim 1, wherein the sample of the material to be analysed is polished following the same procedure used to polish the standard device.

5. Method according to claim 4, wherein the sample of the material to be analysed is mechanically polished up to a mirror finishing.


**Patentansprüche**

1. Eine Methode zur quantitativen Mikroanalyse von Metalllegierungen basierend auf einem System der Röntgenstrahlanalyse, bei dem ein energiedispersives Spektrometer (EDX) verwendet wird, angeschlossen an ein Rasterelektronenmikroskop (REM), welche umfasst:

a) Präparation einer Haltevorrichtung für ein Set Standardproben zur quantitativen Mikroanalyse der genannten Legierung, die zur Verwendung in einem System der Röntgenstrahlanalyse mit dem Einsatz eines EDX angeschlossen an ein REM ausgerichtet ist;
b) Kalibrierung des Systems der quantitativen Mikroanalyse mit einer solchen Standardvorrichtung zur Optimierung der geometrischen und elektronischen Variablen des Mikroanalysesystems und Erstellung einer Anpassungsgleichung, die auf mathematische Weise die Energieniveaus der analysierten Elemente und die prozentuale Zusammensetzung des Standardprobenmaterials verbindet;
c) Präparation jeder zu analysierenden Probe, wobei bei diesen Proben im Großen und Ganzen dasselbe Verfahren angewendet wird wie bei den Standardproben der Standardvorrichtung;

d) Einführung jeder zu analysierenden Probe nach ihrer Präparation in den dazugehörigen Halter für die REM-Probe;

e) Festlegung der elektronischen und geometrischen Variablen der quantitativen EDX-REM-Mikroanalyse, wobei sich die genannten elektronischen Variablen aus der Zeitkonstante des Vielkanalanalysators, der Beschleunigungsspannung, der Intensität der Röntgenstrahlenabsorption (Absorptions-Rate) und der Akquisitionszeit zusammensetzen;

f) Erhalt einer gewissen Anzahl von Spektren von jeder zu analysierenden Probe und Verarbeitung der erhaltenen Daten zur Ermittlung des Energieniveaus jedes im Spektrum vorhandenen Elements, wobei die Energieniveaus jedes im Spektrum vorhandenen Elements ermittelt werden, indem die Escape-Peaks und der Hintergrund eliminiert werden und ein Algorithmus für die Dekonvolution angewandt wird, und

g) Einführung der Energieniveauwerte in die oben definierte Anpassungsgleichung, welche auf mathematische Weise die Energieniveaus der Elemente mit der prozentualen Zusammensetzung der unbekannten Probe in Verbindung setzt, wobei die erwähnte Anpassungsgleichung ein multivariantes Regressionsmodell ist, **gekennzeichnet durch** [4}

$$C_i = (K_i + \Sigma_{j=selec}K'_j I_j)I_i + (K'_i + \Sigma_{j=selec}K''_j I_j)\, I_i^2 + + \Sigma_{j=selec}K_j I_j \qquad [4]$$

wobei

$C_i$ die Gewichtsfraktion des Elements i ist;

$I_i$ das gemessene Energieniveau des Elements i ist;

$I_j$ das gemessene Energieniveau des Elements j bei der gleichen Probe ist;

$K_i$, $K'_i$, $K_j$, $K'_j$, $K''$ die Anpassungskonstanten des Regressionsmodells in den Bedingungen der Datenakquisition sind; und

der untere Index "j=selec" bedeutet, dass nur diejenigen Variablen ausgewählt werden, die statistisch optimale Resultate liefern.

2. Methode nach Anspruch 1, in welcher die genannte Metalllegierung eine auf Stahl oder Eisen basierende Legierung ist.

3. Methode nach Anspruch 1, in welcher die genannte Standardvorrichtung eine Reihe von chemischen und strukturell homogener Stähle enthält, die als Standard in der quantitativen EDX-REM-Mikroanalyse verwendet werden sollen.

4. Methode nach Anspruch 1, in welcher die Probe des zu analysierenden Materials nach dem gleichen Verfahren poliert wird, das zur Polierung der Standardvorrichtung verwandt wird.

5. Methode nach Anspruch 4, in welcher die Probe des zu analysierenden Materials mechanisch spiegelblank poliert wird.

**Revendications**

1. Une méthode de microanalyse quantitative d'alliage de métaux basée sur un système d'analyse de rayons X utilisant un détecteur de rayons X dispersif en énergie (DRDE) relié à un microscope à électrons d'exploration (MEE), consistant à:

a) mettre au point un dispositif de maintien d'un échantillon standard réalisé pour une microanalyse quantitative de l'alliage indiqué et étudié pour son utilisation dans un système d'analyse de rayons X utilisant un DRDE relié à un microscope MEE;

b) calibrer le système de microanalyse quantitative avec un dispositif standard en optimisant les variables géométriques et électroniques du système de microanalyse, et réaliser une équation d'ajustement qui établisse un rapport mathématique entre l'intensité réseau des éléments analysés et le pourcentage de la composition de matériau standard testé;

c) préparer chaque échantillon à analyser en soumettant lesdits échantillons fondamentalement au même traitement que celui appliqué aux échantillons standards du dispositif standard;

d) introduire chaque échantillon à analyser, une fois préparés, dans le dispositif de fixation de l'échantillon MEE.

e) fixer les variables électroniques et géométriques du système de microanalyse quantitative DRDE-MEE, lesdites variables électroniques constituant la constante temporelle de l'analyseur multicanaux, et la tension d'accélération, la densité d'entrée des rayons x (taux d'entrée) et le temps de collection;

f) obtenir un certain nombre de spectres de chaque échantillon à analyser et traiter les données obtenues afin de déterminer l'intensité réseau de chaque élément présent dans le spectre, où l'intensité réseau de chaque élément présent dans le spectre est extraite par l'élimination des taux maximum de fuite et des bruits de fonds et en appliquant un algorithme de déconvolution, et

g) introduire les valeurs d'intensité réseau dans l'équation d'ajustement préalablement définie, laquelle établit un rapport mathématique entre l'intensité réseau des éléments et le pourcentage de la composition de l'échantillon inconnu, où l'équation d'ajustement mentionnée est un modèle de régression multi-variable identifié comme [4]

$$C_i = (K_i + \Sigma_{j=selec}K'_j I_j)I_i + (K'_i + \Sigma_{j=selec}K''_j I_j)\, I_i^{\ 2} + + \Sigma_{j=selec}K_j I_j \qquad [4]$$

où:

$C_i$ est la fraction du poids de l'élément i;

$I_i$ est l'intensité réseau, mesure de l'élément i;

$I_j$ est l'intensité réseau, mesure de l'élément j dans le même échantillon;

$K_i$, $K'_i$, $K_j$, $K'_j$, $K''_j$ sont les constantes d'ajustement du modèle de régression dans les conditions de collection de données; et

L'indice "j=selec" signifie que seules les variables donnant des résultats statistiquement optimaux sont sélectionnées.

2. Méthode selon la revendication 1, **caractérisée en ce que** l'alliage de métal indiqué est un alliage réalisé à partir d'acier ou de fer.

3. Méthode selon la revendication 1, **caractérisée en ce que** ledit dispositif standard maintient un assemblage d'aciers chimiquement et structurellement homogènes pour leur utilisation comme standards dans les microanalyses quantitatives DRDE-MEE.

4. Méthode selon la revendication 1, **caractérisée en ce que** l'échantillon du matériau à analyser est poli selon la méthode utilisée pour polir le dispositif standard.

5. Méthode selon la revendication 4, **caractérisée en ce que** l'échantillon de matériau à analyser est poli mécaniquement au polissage miroir.

FIGURE 1

FIGURE 2

FIGURE 3

FIGURE 4

FIGURE 5

FIGURE 6

FIGURE 7

FIGURE 8

FIGURE 9

FIGURE 10